Europäisches Patentamt

European Patent Office

Office européen des brevets

(11) Veröffentlichungsnummer: **0 537 414 B1**

(12) ## EUROPÄISCHE PATENTSCHRIFT

(45) Veröffentlichungstag der Patentschrift: **22.02.95**

(51) Int. Cl.<sup>6</sup>: **G01C 19/72**

(21) Anmeldenummer: **92109034.6**

(22) Anmeldetag: **29.05.92**

(54) **Faseroptischer Kreisel.**

(30) Priorität: **17.10.91 DE 4134312**

(43) Veröffentlichungstag der Anmeldung:
**21.04.93 Patentblatt 93/16**

(45) Bekanntmachung des Hinweises auf die
Patenterteilung:
**22.02.95 Patentblatt 95/08**

(84) Benannte Vertragsstaaten:
**DE ES FR GB IT NL SE**

(56) Entgegenhaltungen:
**EP-A- 0 078 733**
**EP-A- 0 123 499**
**DE-A- 3 912 005**
**US-A- 4 737 005**

**TELECOMMUNICATIONS AND RADIO ENGI-
NEERING Bd. 41/42, Nr. 8, August 1987, Washington, US, Seiten 123-127, A.N. Gur'yanov
et al: "A rotation sensor based on monomode optical fibers"**

**Selected Papers on Fiber Optic Gyroscopes,
SPIE Milestone Series, Volume MS 8, R.B.
Smith, editor, SPIE, Bellingham, US, 1989,
Seiten 239-264, R. ULRICH: "Polarization and
depolarization in the fiber-optic gyroscope"**

(73) Patentinhaber: **Deutsche Aerospace AG**

**D-81663 München (DE)**

(72) Erfinder: **Poisel, Hans, Dr.**
**Bahnhofstrasse 24**
**W-8505 Röthenbach (DE)**
Erfinder: **Trommer, Gert, Dr.**
**Connollystrasse 16**
**W-8000 München (DE)**
Erfinder: **Ulrich, Reinhard, Prof.**
**Alte Rennbahn 2**
**W-2110 Buchholz (DE)**

EP 0 537 414 B1

**Beschreibung**

Die Erfindung bezieht sich auf einen faseroptischen Kreisel nach dem Oberbegriff des Patentanspruchs 1.

Es ist bekannt, daß der Kontrast des von einem Faserkreisel erzeugten Interferenzsignals durch Polarisations-Koppelzentren im Lichtfaserpfad negativ beeinflußt wird. Während sich diese Störwirkung bei polarisationserhaltenden Koppler-/Faserspulenanordnungen auf die Spleißverbindungen zwischen den einzelnen Faserabschnitten beschränkt und, wenn auch mit großem Bauaufwand, durch eine hochexakte, hinsichtlich der Polarisations-Hauptachsen zueinander fluchtende Ausrichtung der Faserenden beim Spleißvorgang ausgleichen läßt, sind bei neueren, etwa aus der US-PS 4 440 498 oder der DE-OS 3 912 005 bekannten Faserkreiseln der eingangs genannten Art, die einen 3x3-Koppler und eine Monomode-Faserspule enthalten und aufgrund der inhärenten Phasenverschiebung am Quadraturpunkt arbeiten, solche Kontrast-Störzentren im Monomode-Faserstrang selbst vorhanden und nicht durch eine polarisationserhaltende Verspleissung der Faserenden zu beseitigen. Aus diesem Grund ist nach der erwähnten DE-OS eine kontrastunabhängige Signalauswertung mit Hilfe einer Drei-Punkt-Lichtintensitätsmessung vorgesehen, die jedoch versagt, wenn der Kontrast infolge einer ungünstigen Konstellation der Koppelzentren in der Faserspule gegen Null geht.

Aufgabe der Erfindung ist es, einen Faserkreisel der eingangs genannten Art so auszubilden, daß auf baulich einfache Weise und unabhängig von störenden Koppelungseffekten in der Monomode-Faserspule ein maximaler Kontrast des Interferenzsignals erreicht wird.

Diese Aufgabe wird erfindungsgemäß durch den in Patentanspruch 1 gekennzeichneten Faserkreisel gelöst.

Erfindungsgemäß werden durch die Kombination eines in der im Patentanspruch 1 genannten Weise polarisationsdrehenden Faserstücks mit dem nicht-polarisationserhaltenden, spulenbildenden Monomode-Faserstrang die Übertragungseigenschaften des resultierenden Gesamtsystems derart modifiziert, daß die durch eine Kreuzkoppelung in der Faserspule verursachte Phasenverschiebung durch eine gezielt gegensinnige Polarisationsdrehung in dem eingefügten Faserstück wirkungsmäßig aufgehoben und auf diese Weise ein Interferenzsignal mit einem maximalen Kontrast erhalten wird, mit der Besonderheit, daß sich der dafür erforderliche Polarisations-Drehwinkel mit sehr geringem Justieraufwand auf den richtigen Wert einstellen läßt.

Ein weiterer wesentlicher Aspekt der Erfindung, aus dem sich eine besonders bau- und montagegünstige Einbeziehung des polarisationsdrehenden Faserstücks in den Monomode-Faserstrang ergibt, ohne daß der Polarisations-Drehwinkel in aufwendiger Weise vor dem Zusammenfügen der Faserenden vorjustiert werden muß, besteht gemäß Anspruch 2 darin, daß das Faserstück in dem hinsichtlich des Polarisations-Drehwinkels unjustierten Zustand mit endseitigen Spleißverbindungen versehen und erst im fertig verspleißten Zustand bis zum Erreichen des minimalen Ausgangssignals um die Faserlängsachse verdrillt wird, wobei zumindest das dabei verdrehte Ende des Faserstücks an eine nominell nicht-polarisationserhaltende Faser angeschlossen ist, um zu verhindern, daß in letzterer beim Verdrillen des angespleißten Faserstückendes eine Rückdrehung des Lichtes auftritt, die die angestrebte Kontrastmaximierung wirkungslos machen könnte. Dabei wird für das polarisationsdrehende Faserstück entweder eine zirkular doppelbrechende, gemäß Anspruch 3 aber vorzugsweise eine vor dem Verdrillen linear doppelbrechende Faser verwendet.

Gemäß einer alternativen, ebenfalls äußerst bau- und justiergünstigen Ausgestaltung der Erfindung ist nach Anspruch 4 als kontrasteinstellendes Faserstück ein Monomode-Faserstück vorgesehen, welches zur Erzeugung der zirkularen Doppelbrechung bis zum Erreichen des polarisations-Drehwinkels verdrillt und im verdrillten Zustand endseitig verspleißt wird. Dies hat den Vorteil, daß das kontrasteinstellende Faserstück und die Faserspule aus einer einzigen Monomode-Faser hergestellt sein können und sich fertigungsbedingte Verdrillwinkelfehler, soweit sie nicht nach dem Spleißvorgang zu korrigieren sind, nur verhältnismäßig geringfügig auf die Kontrastmaximierung auswirken, da der zur Erzeugung einer zirkularen Doppelbrechung in einem Monomode-Faserstück benötigte Verdrillwinkel vielfach-bei Quarzglasfasern etwa sechsmalhöher liegt als der erzielte Polarisations-Drehwinkel, so daß sich in diesem Fall, d.h. wenn das Einjustieren der zirkularen Doppelbrechung vor dem Verspleißen des Faserstücks erfolgt, eine in höchst wünschenswerter Weise reduzierte Justierempfindlichkeit ergibt.

Aus Gründen einer weiteren Fertigungserleichterung vor allem im Hinblick auf eine möglichst geringe Anzahl zusätzlicher Spleißverbindungen, die für das Einfügen des polarisationsdrehenden Faserstücks benötigt werden, empfiehlt es sich schließlich gemäß Anspruch 5, das Faserstück am kopplerseitigen Faserspulenende anzufügen, also über eine ohnehin benötigte Spleißverbindung unmittelbar an den Koppler anzuschließen.

Die Erfindung wird nunmehr anhand eines Ausführungsbeispieles in Verbindung mit den Zeichnungen näher erläutert. Es zeigen in stark schematisierter Darstellung:

**Fig. 1** einen faseroptischen Kreisel;

**Fig. 2** eine vergrößerte Teildarstellung des Faserkreisels gemäß Fig. 1 im Bereich des polarisationsdrehenden Faserstücks;

**Fig. 3** den Verlauf der Fotodetektor-Ausgangssignale in Abhängigkeit von der Sagnac-Phase des Faserkreisels zum einen ohne (a) und zum anderen mit (b) eingefügtem, polarisationsdrehenden Faserstück.

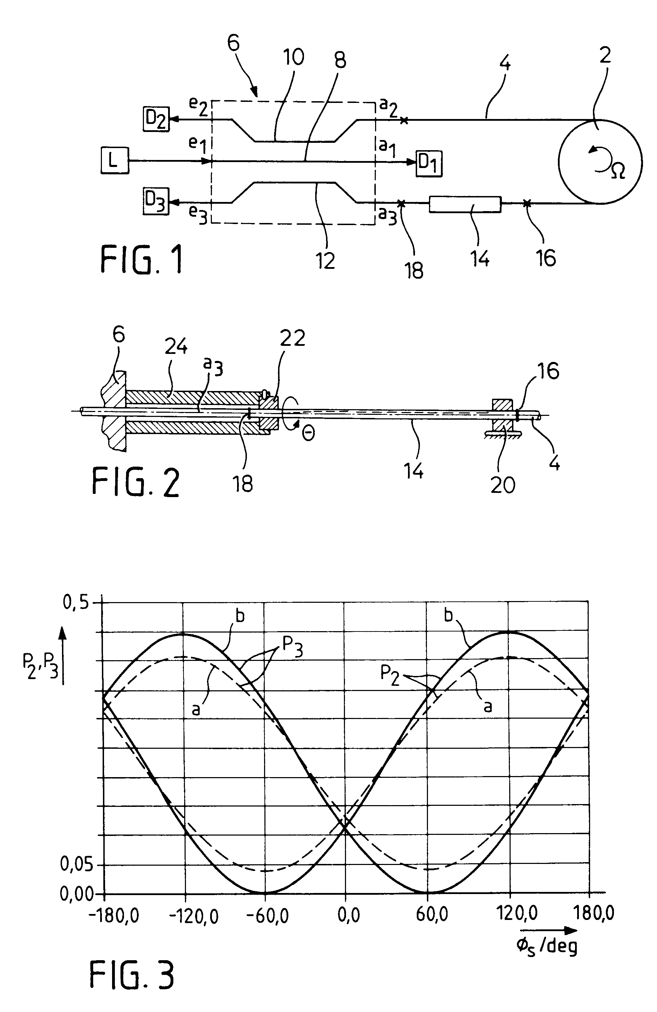

Der in Fig. 1 gezeigte Faserkreisel enthält als Hauptbestandteile eine Faserspule 2, bestehend aus einer nominell nicht-polarisationserhaltenden Monomode-Faser 4, sowie einen $3 \times 3$ - Koppler 6 mit drei miteinander verschmolzenen Übertragungsfasern 8, 10 und 12, die ebenfalls vom nicht-polarisationserhaltenden Monomode-Typ sind, wobei die zentrale Faser 8 mit ihrem Eingang $e_1$ an eine Lichtquelle L unpolarisierten Lichtes und mit ihrem Ausgang $a_1$ an eine Fotodiode D1 angeschlossen ist, während die beiden anderen Übertragungsfasern 10, 12 mit ihren am gleichen Ende wie die Fotodiode $D_1$ liegenden Anschlüssen $a_2$ und $a_3$ jeweils an einem Faserspulenende und mit ihren gegenüberliegenden Anschlüs- sen $e_2$ und $e_3$ jeweils an einer weiteren Fotodiode $D_2$ bzw. $D_3$ an- liegen. Insoweit ist der Faserkreisel von einer etwa aus der erwähnten DE-OS 3 912 005 bekannten Bauart. wobei die Ausgangssignale, $P_2$ und $P_3$, der Fotodioden $D_2$ bzw. $D_3$ eine Funktion der Sagnac-Phasenverschiebung $\phi_s$ sind, die mit der Winkelgeschwindigkeit $\Omega$ des Faserkreisels und dem Skalierungsfaktor s entsprechend der Gleichung $\phi_s = s . \Omega$ verknüpft ist. Mit Hilfe des Ausgangssignals der Fotodioden $D_1$, $D_2$ und $D_3$ läßt sich die Winkelgeschwindigkeit des Faserkreisels unabhängig vom jeweiligen Wert des Kontrastes bestimmen, um umweltbedingte Kontrastschwankungen auszugleichen. Voraussetzung dafür ist jedoch, daß der Kontrastfaktor deutlich vom Wert Null verschieden ist, was nicht immer gewährleistet ist.

Aus diesem Grund und im Hinblick auf ein deutlich verbessertes Signal-/Rauschverhältnis ist bei dem in Fig. 1 gezeigten Faserkreisel zur Kontrastmaximierung ein Kontrast-Einstellelement in Form eines polarisationsdrehenden Faserstücks 14 zwischen dem einen Ende der Monomode-Faserspule 2 und dem zugeordneten, spulenseitigen Anschluß $a_3$ des Kopplers 6 über Spleißverbindungen 16, 18 eingefügt. Das Faserstück 14 ist linear doppelbrechend und erhält durch Verdrillen zwischen seinen Enden eine zirkular doppelbrechende Übertragungscharakteristik. Durch das Anfügen des polarisationsdrehenden Faserstücks 14 an den Monomode-Faserstrang 4 werden die Polarisationseigenschaften der Lichtübertragungsstrecke derart verändert, daß sich für das aus Spule 2 und Faserstück 14 bestehende Gesamtsystem ein maximaler Kontrast einstellen läßt. Dabei muß der Polarisations-Drehwinkel $\theta$ des Faserstücks 14 so gewählt werden, daß

$$\theta = \arc \sin \left( \sqrt{\frac{\alpha \sin^2 \eta}{(1-\alpha) \sin^2 \xi + \alpha \sin^2 \eta}} \right) .$$

Hierbei ist $\alpha$ ein Maß für die Stärke von Koppelzentren in der Faserspule 2, an denen eine x-Polarisation in eine y-Polarisation überführt wird und umgekehrt, $\xi$ ist die aus der effektiven Doppelbrechung der Faser 4 resultierende Phasenverschiebung und $\eta$ ist die durch Kreuzkoppelung in der Faserspule 2 zusätzlich erzeugte Phasenverschiebung. Unter Einbeziehung der zirkularen Doppelbrechung am Faserstück 14 mit dem nach obiger Gleichung eingestellten Polarisations-Drehwinkel $\theta$ wird die Phasenverschiebung $\eta_{ges}$ in der gesamten Übertragungsstrecke 4 und 14 auf Null gebracht, was wiederum zur Folge hat, daß der Kontrastfaktor k auf den Wert 1 ansteigt.

Das Ergebnis der Konrastmaximierung ist in Fig. 3 anhand des Signalverlaufs der Fotodioden-Ausgangssignale $P_2$ bzw. $P_3$ dargestellt. Die Kurven a gelten für einen herkömmlichen Monomode-Faserstrang 4, also ohne kontrastoptimierendes Faserstück 14, mit den Werten $\alpha = 0,117$, $\xi = 40°$ und $\eta = 60°$, was einen Kontrast $k = 0,82$ ergibt. Durch Einfügen der zirkularen Doppelbrechung mittels des Faserstücks 14 mit einem Rotationswinkel $\theta = 26,12°$ ergeben sich für den Faserkreisel die Kurven b, d.h. der Kontrast wird auf den vollen Wert $k = 1$ gesteigert.

Wie sich ferner aus den Kurven a und b gemäß Fig. 3 ablesen, aber auch analytisch nachweisen läßt, wird das Ausgangssignal, $P_2$ bzw. $P_3$, bei ruhendem Kreisel, also $\phi_s = 0$, nimimal, wenn der Kontrast seinen Maximalwert erreicht. Dies wird für eine einfache Justierung des erforderlichen Polarisations-

Drehwinkels $\theta$ des Faserstücks 14 in der Weise genutzt, daß das Faserstück 14 im zunächst unverdrillten Zustand einerseits über den Spleiß 16 mit dem Faserspulenende und andererseits über den Spleiß 18 mit dem Koppleranschluß a₃ verbunden und dann im Bereich seines spulenseitigen Endes durch einen Halter 20 (Fig. 2) drehfest fixiert wird, während das andere kopplerseitige Ende des Faserstücks 14 an einem in Drehrichtung einstellbaren Justierglied 22 befestigt wird. Durch Drehung des Justiergliedes 22 wird das Faserstück 14 bei ruhendem Kreisel in seiner Längsachse soweit verdrillt, bis das Ausgangssignal $P_2$ und/oder $P_3$ auf den niedrigstmöglichen Wert eingestellt ist. Mit der so erhaltenen Verdrillung, also für das o.a. Zahlenbeispiel bei einem Verdillwinkel von 26,12° wird das Faserstück 14 dauerhaft, etwa durch eine drehfeste Sicherung des Justierelementes 22 an einem Gehäuseteil 24 des Kopplers 6, fixiert.

Eine alternative Ausführungsform besteht darin, als polarisationsdrehendes Faserstück 14 einen z.B. 0,5 bis 1 m langen Endabschnitt des Monomode-Faserstrangs 4 selbst zu verwenden, so daß auf die Spleißverbindung 16 verzichtet werden kann. In diesem Fall wird das Monomode-Faserstück in dem mit dem Anschluß a₃ noch unverspleißten Zustand am Halter 20 eingespannt und an seinem freien Ende zur Erzeugung einer zirkularen Doppelbrechung um seine Längsachse elastisch verdrillt. Dabei ist der erzielte Polarisations-Drehwinkel $\theta$ des Monomode-Faserstücks 14 um ein Vielfaches kleiner als der mechanische Verdrillwinkel, nämlich bei Quarzglasfasern etwa um den Faktor 6, d.h. um in einem solchen Monomode-Faserstück 14 die im obigen Zahlenbeispiel angegebene Polarisationsdrehung von 26,12° zu erreichen, muß ein Verdrillwinkel von etwa 155° gewählt werden. Abweichungen vom Verdrill-Sollwinkel haben nur einen sehr geringen Einfluß auf die angestrebte Kontrastoptimierung. Im verdrillten Zustand wird das Faserstück 14 wiederum dauerhaft fixiert und dann an den Anschluß a₃ des Kopplers 6 angespleißt. Ein eventuell noch vorhandener Verdrillfehler kann nunmehr unter Beobachtung des Ausgangssignals $P_2$ und/oder $P_3$ ausjustiert werden, soweit dadurch nicht in der Anschlußfaser 12 des Kopplers 6 eine der Nachjustierung entgegengesetzt gleichgroße Lichtdrehung verursacht wird. In jedem Fall läßt sich aber auch bei dieser Ausführungsform problemlos ein für eine kontrastunabhängige Signalauswertung nach der eingangs erwähnten DE-OS ausreichend weit von Null abweichender Kontrastfaktor gewährleisten.

**Patentansprüche**

1. Faseroptischer Kreisel mit einem zwischen einer Lichtquelle (L) und einer nicht polarisationserhaltenden Monomode-Faserspule (2) angeordneten, unpolarisiertes Licht in die Spulenenden einkoppelnden 3x3-Koppler (6) und zu mindest einem dem Koppler zugeordneten Fotodetektorelement (D2, D3) zur Erzeugung eines der vom Koppler übertragenen Lichtintensität entsprechenden Ausgangssignals,
   **dadurch gekennzeichnet,** daß
   zwischen den spulenseitigen Anschlußstellen (a₂, a₃) des 3x3-Kopplers (6) im Zuge des Monomode-Faserstrangs (4) zumindest ein Kontrasteinstellelement in Form eines polarisationsdrehenden Faserstücks (14) angeordnet ist, dessen Polarisations-Drehwinkel ($\theta$) derart eingestellt ist, daß das Ausgangssignal ($P_2$, $P_3$) des Fotodetektorelements (D₂, D₃) bei ruhendem Kreisel minimal ist.

2. Faseroptischer Kreisel nach Anspruch 1,
   **dadurch gekennzeichnet,** daß
   das Faserstück (14) im bezüglich des Polarisations-Drehwinkels ($\theta$) unjustierten Zustand mit endseitigen Spleißverbindungen (16, 18) versehen ist, wobei zumindest eine der angespleißten Fasern (4, 12) nicht-polarisationserhaltend ausgebildet ist und daß zum Einjustieren des Ausgangssignals ($P_2$, $P_3$) das Faserstück im Bereich der einen Spleißverbindung (16) fixiert und im Bereich der anderen, auf seiten der nicht-polarisationserhaltenden Faser liegenden Spleißverbindung (18) in Übereinstimmung mit dem Polarisations-Drehwinkel um die Faserlängsachse drehpositionierbar angeordnet ist.

3. Faseroptischer Kreisel nach Anspruch 2,
   **dadurch gekennzeichnet,** daß
   das Faserstück (14) linear doppelbrechend ausgebildet ist.

4. Faseroptischer Kreisel nach Anspruch 1,
   **dadurch gekennzeichnet,** daß
   als polarisationsdrehendes Faserstück (14) ein Monomode-Faserstück vorgesehen ist, welches zur Erzeugung einer zirkularen Doppelbrechung bis zum Erreichen des Polarisations-Drehwinkels ($\theta$) verdrillt und im verdrillten Zustand fixiert und verspleißt ist.

**5.** Faseroptischer Kreisel nach einem der vorhergehenden Ansprüche, **dadurch gekennzeichnet,** daß das polarisationsdrehende Faserstück (14) im Bereich eines der kopplerseitigen Endabschnitte der Faserspule (2) angeordnet ist.

**Claims**

**1.** A fibre-optic gyro comprising a 3x3 coupler (6), which is arranged between a light source (L) and a non-polarized monomode fibre coil (2) and which couples unpolarized light into the coil ends, and at least one photo-detector element ($D_2$, $D_3$), which is associated with a coupler, for the purpose of generating an output signal which corresponds with the light intensity transmitted by the coupler, **characterized in that** between the coil's connecting points ($a_2$, $a_3$) of the 3x3 coupler (6) and within the monomode fibre strand (4) is arranged at least one contrast-setting element in the form of a polarization turning fibre element (14), the polarization rotary angle ($\Theta$) is set so that the output signal ($P_2$, $P_3$) of the photo-detector element ($D_2$, $D_3$) is at a minimum when the gyro is idle.

**2.** A fibre-optic gyro according to claim 1, **characterized in that** the fibre element (14) is, in its not calibrated state relative to the polarization rotary angle ($\Theta$), provided with splicing joints (16, 18) at the ends, and that at least one of the splice fibres (4, 12) is arranged to be non-polarized, and that, for the purpose of calibration of the output signal ($P_2$, $P_3$), the fibre element is fixed in the area of the one splice (16) and arranged in the area of the other splice (18) at the side of the non-polarized fibre to be rotationally positionable to correspond with the polarization rotary angle around the longitudinal fibre axis.

**3.** A fibre-optic gyro according to claim 2, **characterized in that** the fibre element (14) is arranged to allow linear double refraction.

**4.** A fibre-optic gyro according to claim 1, **characterized in that** the polarization turning fibre element (14) is a monomode fibre element which, for the purpose of producing a circular double refraction until the polarization rotary angle ($\Theta$) has been reached, is drilled and fixed and spliced in the drilled state.

**5.** A fibre-optic gyro according to one of the above claims, **characterized in that** the polarization turning fibre element (14) is arranged in the area of an end section of the fibre coil (2) at the coupler.

**Revendications**

**1.** Gyroscope à fibres optiques comprenant un coupleur 3x3 (6) qui est disposé entre une source de lumière (L) et une bobine (2) de fibre monomode du type à non-conservation de l'état de polarisation et introduit de la lumière non polarisée dans les extrémités de la bobine, et au moins un élément photodétecteur ($D_2$, $D_3$) associé au coupleur en vue de la production d'un signal de sortie correspondant à l'intensité lumineuse transmise par le coupleur, caractérisé par le fait qu'entre les emplacements de jonction ($a_2$, $a_3$), côté bobine, du coupleur 3x3 (6), sur le parcours de la fibre monomode (4), est disposé au moins un élément de réglage de contraste sous la forme d'un tronçon de fibre (14) à rotation de polarisation, dont l'angle de rotation de polarisation ($\Theta$) est réglé de manière que le signal de sortie ($P_2$, $P_3$) de l'élément photodétecteur ($D_2$, $D_3$) soit minimal lorsque le gyroscope est au repos.

**2.** Gyroscope à fibres optiques suivant revendication 1, caractérisé par le fait que le tronçon de fibre (14) est muni, à l'état non réglé en ce qui concerne l'angle de rotation de polarisation ($\Theta$), de jonctions d'extrémité par épissurage (16, 18), au moins l'une des fibres (4, 12) jonctionnées par épissurage étant du type à non-conservation de l'état de polarisation, et qu'en vue du réglage du signal de sortie ($P_2$, $P_3$), le tronçon de fibre est fixé dans la zone d'une des jonctions par épissurage (16) et est disposé, dans la zone de l'autre jonction par épissurage (18) située du côté de la fibre du type à non-conservation de l'état de polarisation, de manière à pouvoir être positionné angulairement autour de l'axe longitudinal de la fibre en accord avec l'angle de rotation de polarisation.

**3.** Gyroscope à fibres optiques suivant revendication 2, caractérisé par le fait que le troncon de fibre (14) est réalisé avec double réfraction linéaire.

4. Gyroscope à fibres optiques suivant revendication 1, caractérisé par le fait que le troncon de fibre (14) à rotation de polarisation est constitué par un tronçon de fibre monomode qui, en vue de la production d'une double réfraction circulaire, est tordu jusqu'à l'obtention de l'angle de rotation de polarisation ($\Theta$) et est fixé et épissuré à l'état tordu.

5. Gyroscope à fibres optiques suivant l'une des revendications précédentes, caractérisé par le fait que le tronçon de fibre (14) à rotation de polarisation est disposé dans la zone d'un des tronçons d'extrémité, côté coupleur, de la bobine de fibre (2).

FIG. 1

FIG. 2

FIG. 3